# NEUE EUROPÄISCHE PATENTSCHRIFT

(11) **EP 1 744 919 B2**
(45) Veröffentlichungstag und Bekanntmachung des Hinweises auf die Entscheidung über den Einspruch: **25.01.2017**
(45) Hinweis auf die Patenterteilung: 24.07.2013
(21) Anmeldenummer: 05736326.9
(22) Anmeldetag: 20.04.2005
(51) Int. Cl.: B60J 7/047, B60J 7/20

(54) **KRAFTFAHRZEUG MIT BEWEGLICHEN PLATTENFÖRMIGEN DACHTEILEN**
MOTOR VEHICLE COMPRISING DISPLACEABLE PLATE-SHAPED ROOF PARTS
VÉHICULE COMPORTANT DES ÉLÉMENTS DE TOIT MOBILES EN FORME DE PANNEAU

(30) Priorität: 21.04.2004 DE 102004020008
(43) Veröffentlichungstag der Anmeldung: 24.01.2007
(73) Patentinhaber: Valmet Automotive Oy, 23500 Uusikaupunki (FI)
(72) Erfinder: KREILING, Nils, 49078 Osnabrück (DE)
(74) Vertreter: Kronthaler, Schmidt & Coll.
(86) Internationale Anmeldenummer: PCT/DE2005/000720
(87) Internationale Veröffentlichungsnummer: WO 2005/102755

(56) Entgegenhaltungen:
- EP-A- 1 031 448
- DE-A1- 10 043 712
- DE-A1- 19 908 253
- DE-A1- 29 804 387
- DE-C1- 10 025 051
- DE-C1- 19 943 713
- DE-U1- 20 204 110
- FR-A- 2 797 226
- FR-A- 2 851 747
- NL-C2- 1 016 394
- US-A1- 2004 051 347
- US-B1- 6 412 860
- US-B1- 6 419 308
- US-B1- 6 428 090

## Beschreibung

Die Erfindung betrifft ein Kraftfahrzeug mit karosseriefesten Dachrahmenteilen oberhalb von Seitenscheiben.

Ein solches Kraftfahrzeug ist aus der DE 100 43 712 Al und der DE 100 25 051 C1 bekannt. Weiterhin ist ein über eine Heckklappe eines Fahrzeugs schiebbares Dachteil in der DE 298 04 387 U1 offenbart. Aus der FR 2 797 226 ist ebenfalls ein Dach mit zwei beweglichen Dachteilen bekannt.

Aus der DE 296 22 436 U1 ist ein Kraftfahrzeug mit einem Steilheck bekannt, das von einem Windschützscheibenrahmen bis zum Heck erstreckte obere Dachrahmenteile aufweist, zwischen denen hintereinander jeweils in sich starre, jedoch bewegliche Dachteile halterbar sind, die aus ihrer geschlossenen Stellung in eine in die Karosserie abgesenkte Offenstellung verlagerbar sind. Die Dachteile müssen vor ihrem Absenken in eine oberhalb der Seitenrahmen stehende, nahezu vertikale Stellung verlagert werden, wodurch sich während der Bewegung eine große Fahrzeughöhe und Windangriffsfläche ergeben. Die Dachteile können nur gemeinsam geöffnet oder geschlossen werden.

Der Erfindung liegt das Problem zugrunde, bei einem Cabriolet-Fahrzeug mit mehreren starren Dachteilen die Flexibilität der Dachöffnung zu optimieren.

Die Erfindung löst dieses Problem durch ein Kraftfahrzeug mit den Merkmalen des Anspruchs 1. Hinsichtlich weiterer vorteilhafter Ausgestaltungen der Erfindung wird auf die abhängigen Ansprüche verwiesen.

Dadurch, daß zwischen den karosseriefesten Rahmenteilen eine Schiebedachfunktion von zumindest zwei in sich starren Dachteilen vorgesehen ist, kann mit der Erfindung das Freiluftgefühl auch bei ansonsten geschlossenem Dach verbessert sein. Dennoch ist ein gesamtes Ausheben der beiden Dachteile aus ihrer zwischen den seitlichen Dachrahmenteilen liegenden Stellung dadurch ermöglicht, daß die starre karosseriefeste Führungsschiene in eine mitbewegte Fortsetzung des hinteren Dachteils übergeht, so daß das vordere Dachteil in seiner nach Art eines Schiebedachs geöffneten Stellung vollständig an dem hinteren Dachteil zugeordnete Führungshilfen übergeben und somit von den karosseriefesten Führungsschienen unabhängig bewegbar ist. Durch die fluchtende Lage der beweglichen Fortsetzung ist die Übergabe nahezu ohne Überwindung einer Stufe und damit ohne einen deutlichen Widerstand möglich.

Indem dem hinteren Dachteil neben der Fortsetzung der ansonsten karosseriefesten Führungsschiene eine weitere Längsführung zugeordnet ist, kann das vordere Dachteil an dem hinteren doppelt geführt sein, etwa mit einem hinteren Ausleger in der weiter oben liegenden Führungsbahn und mit einem vorderen Ausleger erst kurz vor der vollständig nach Art eines Schiebedachs geöffneten Stellung in die Fortsetzung eintreten. Diese kann vorteilhaft sehr kurz sein, insbesondere weniger als sechs Zentimeter lang, woraus resultiert, das auch das hintere Dachteil eine nur geringe Dicke aufzuweisen braucht und nur in einem begrenzten vorderen Bereich für die Fortsetzung eine Dickenzunahme benötigt. Das Packmaß der vollständig geöffneten Dachteile bleibt daher gering.

Mit einem vorteilhaften Aufwärtsverlaufen der karosseriefesten Führungsschienen entgegen der Fahrtrichtung kann das vordere Dachteil ohne ein manuelles Anheben über das hintere verlagerbar sein und daher auch bei seiner Öffnung die volle Kopffreiheit bewahren. Durch die einfache Translationsbewegung für die Schiebedachöffnung in den gekrümmten Führungsschienen ist diese auch manuell möglich.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: eine perspektivische Gesamtansicht eines erfindungsgemäßen Kraftfahrzeugs mit geschlossenen Dachteilen und geschlossenem hinterem Dachabschnitt,
- Fig. 2: eine ähnliche Ansicht wie Fig. 1 bei beginnender Verlagerung eines vorderen plattenförmigen Dachteils über das dahinter liegende nach Art eines Schiebedachs,
- Fig. 3: eine ähnliche Ansicht wie Fig. 2 mit vollständig geöffnetem Schiebedach und geschlossenem hinterem Dachabschnitt,

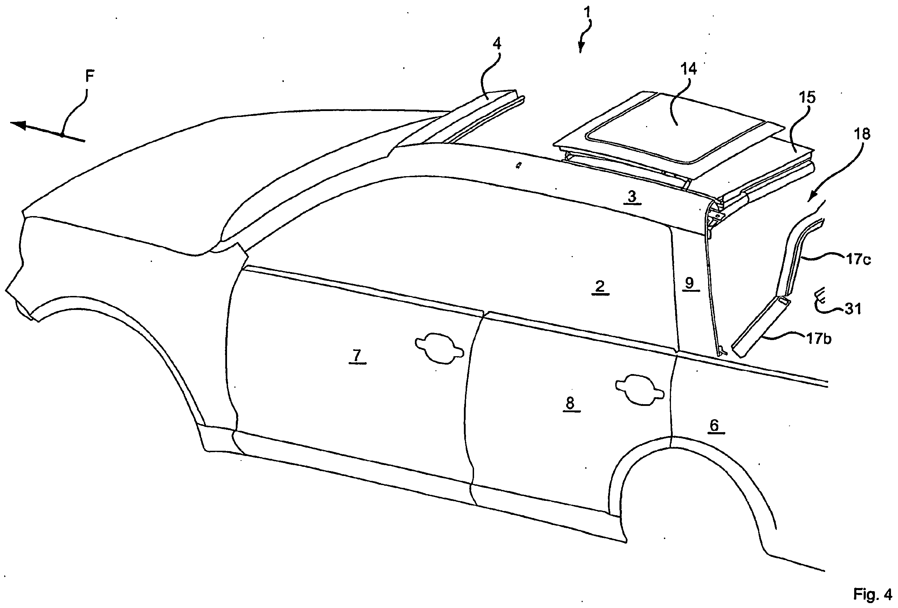

- Fig. 4: eine ähnliche Ansicht wie Fig. 3 bei beginnender Öffnung des hinteren Dachabschnitts,

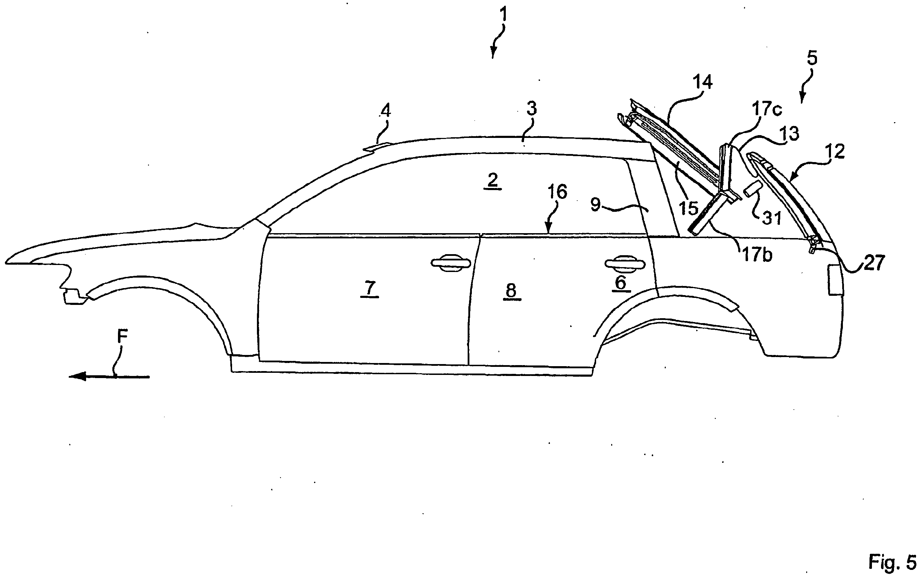

- Fig. 5: eine Seitenansicht des Fahrzeugs nach Fig. 4 während des Absenkens der vorderen Dachteile bei teilweise geöffnetem hinterem Dachabschnitt,
- Fig. 6: eine Ausschnittsvergrößerung des Fahrzeugheckbereichs in Seitenansicht während der Ablagephase der Dachteile,

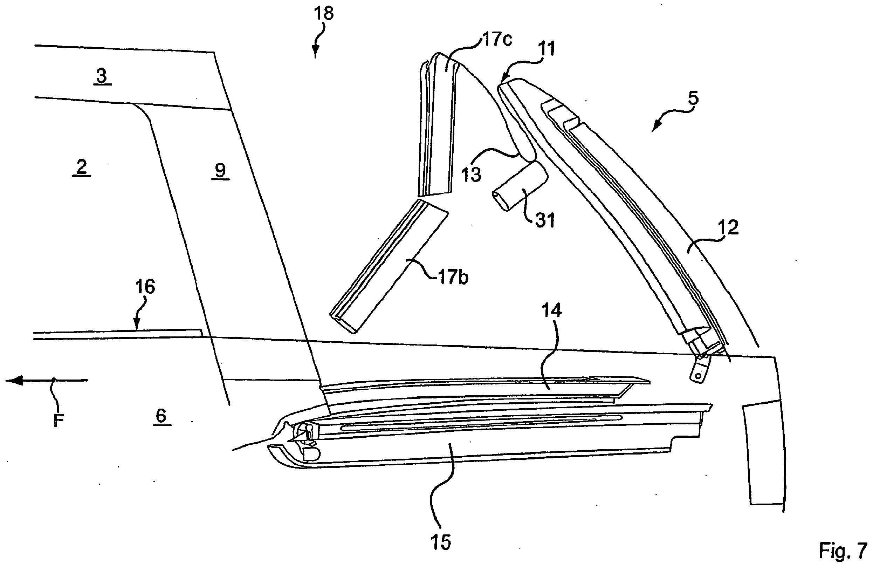

- Fig. 7: eine ähnliche Ansicht wie Fig. 6 bei in Öffnungsstellung vollständig horizontal abgelegten Dachteilen,
- Fig. 8: eine ähnliche Ansicht wie Fig. 7 nach Schließen des hinteren Dachabschnitts über den abgelegten Dachteilen,
- Fig. 9: eine ähnliche Ansicht wie Fig. 7 nach Öffnen des hinteren Dachabschnitts und seiner Ablage über den geöffneten Dachteilen,

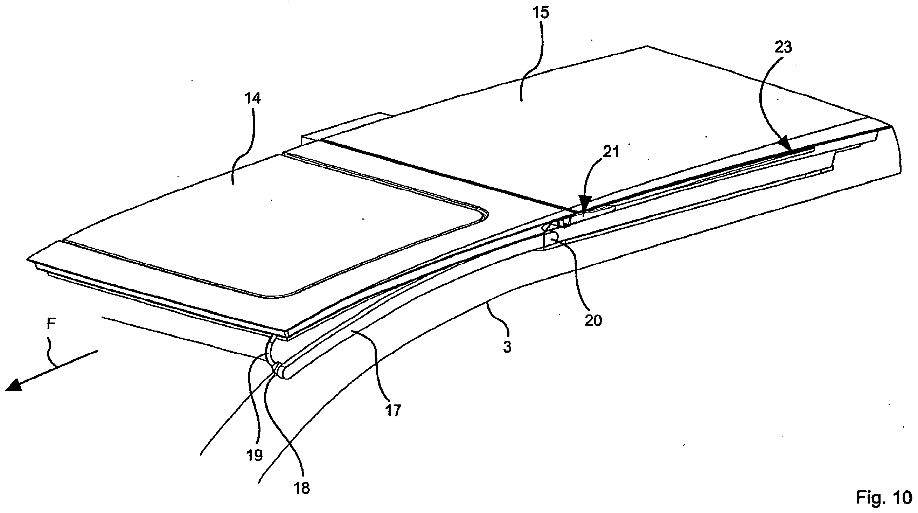

- Fig. 10: einen Detailausschnitt der als Einzelteile herausgezeichneten, fluchtend hintereinander liegenden Dachteile in der nach Fig. 1 geschlossenen Stellung,

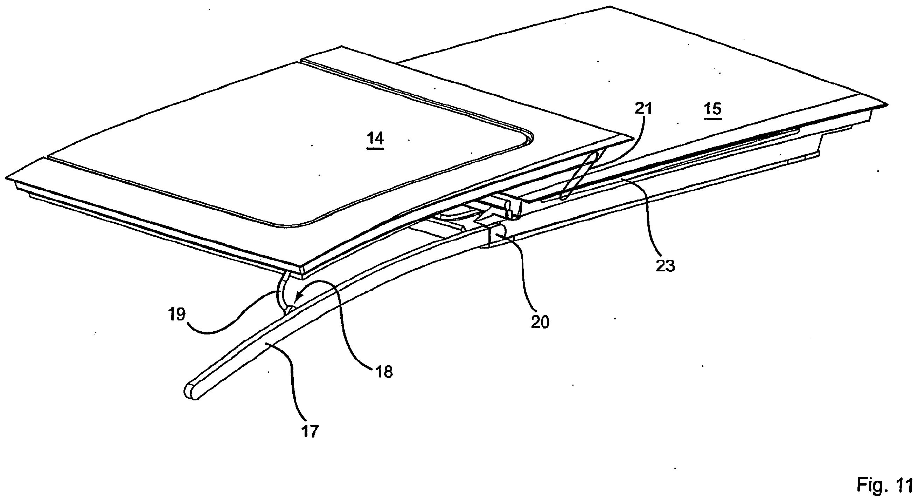

- Fig. 11: eine ähnliche Ansicht wie Fig. 10 der Dachteile in einer Öffnungsstellung etwa entsprechend der aus Fig. 2,

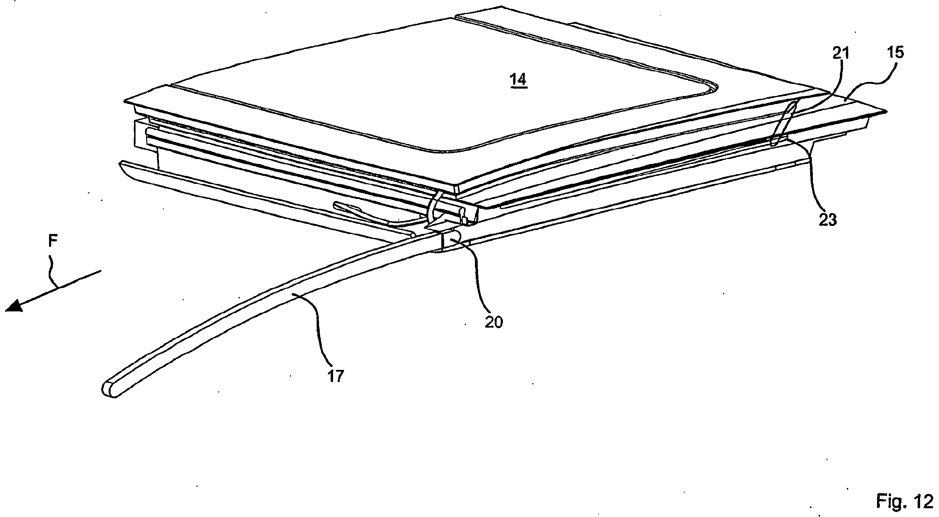

- Fig. 12: eine ähnliche Ansicht wie Fig. 11 der Dachteile in einer Öffnungsstellung etwa entsprechend der aus Fig. 3,

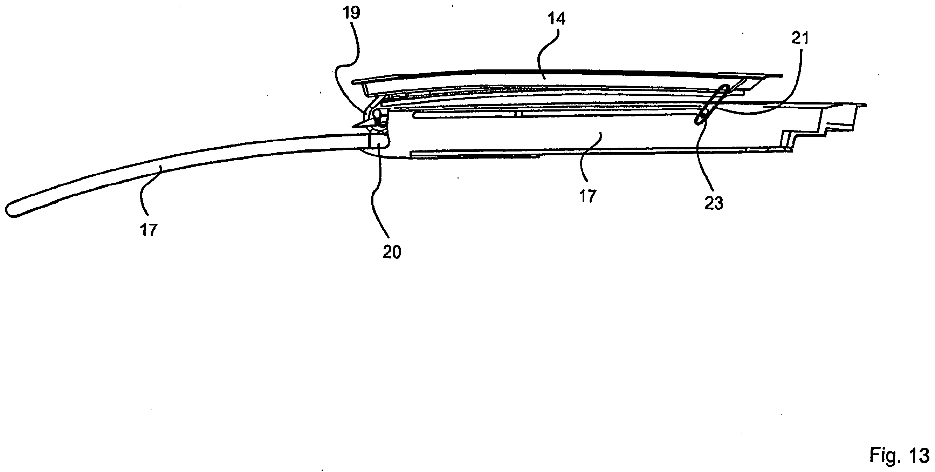

- Fig. 13: die Teile in Stellung nach Fig. 12 in Seitenansicht,

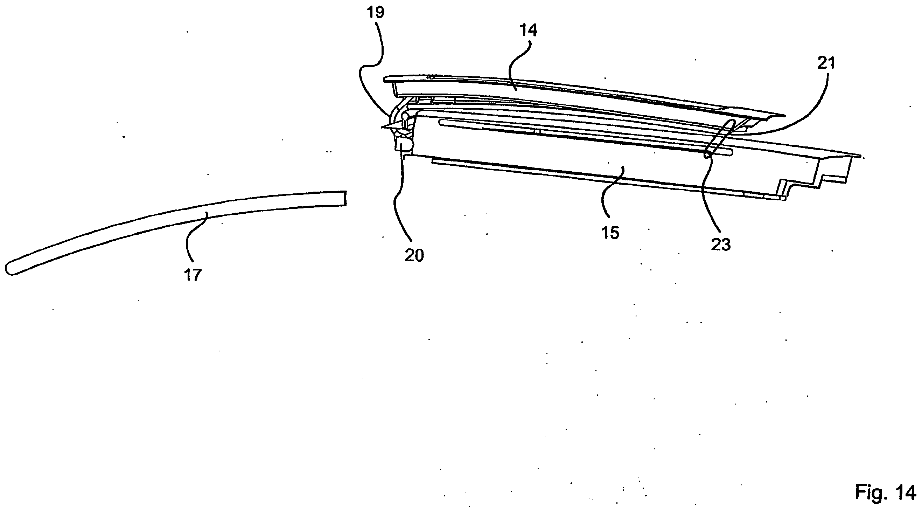

- Fig. 14: ein ähnliche Ansicht wie Fig. 13 während der beginnenden Ablage der Dachteile in der Karosserie,
- Fig. 15 bis Fig. 20: den Ablagemechanismus der übereinander liegenden Dachteile zu ihrer Ablage in der Karosserie, darin

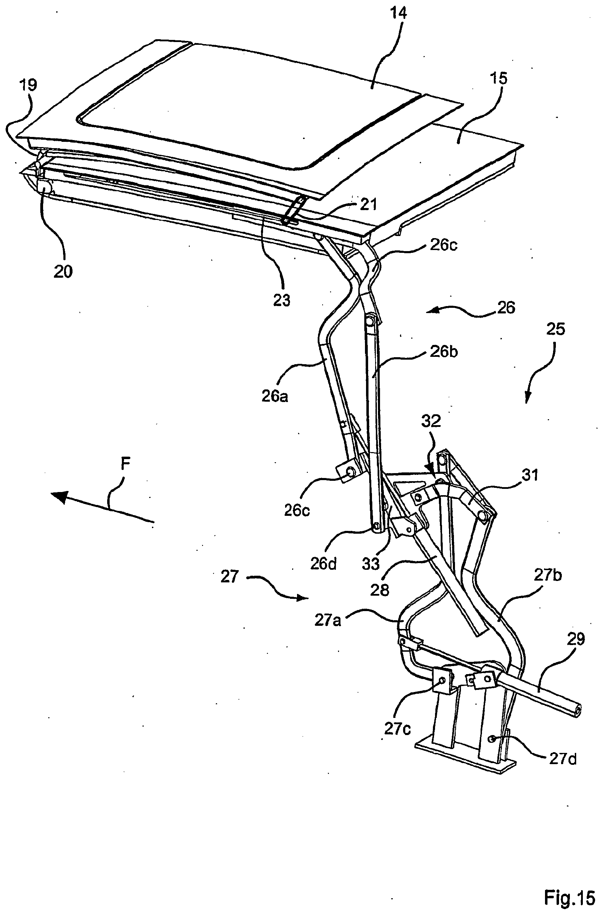

- Fig. 15: die noch horizontal an den seitlichen Rahmenteilen abgestützten Dachteile,

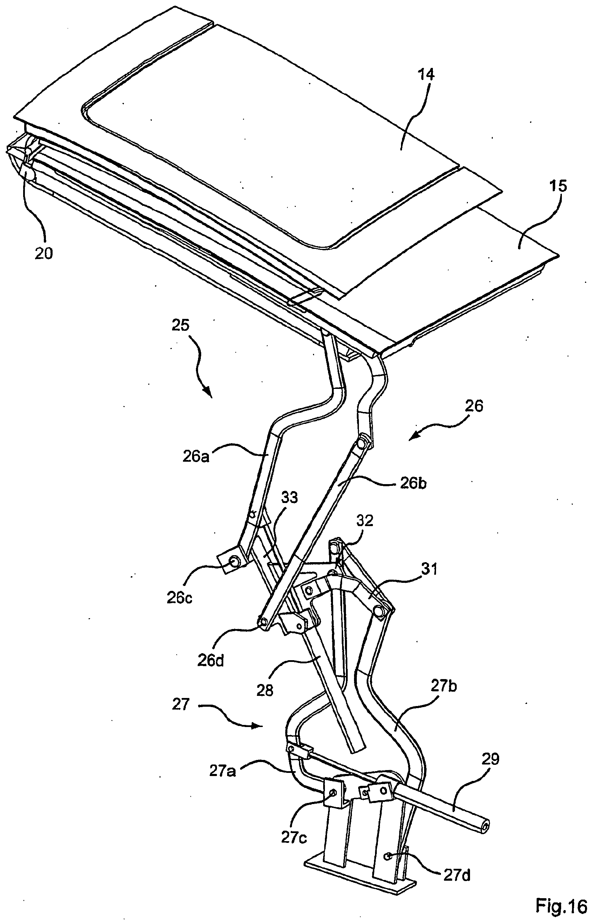

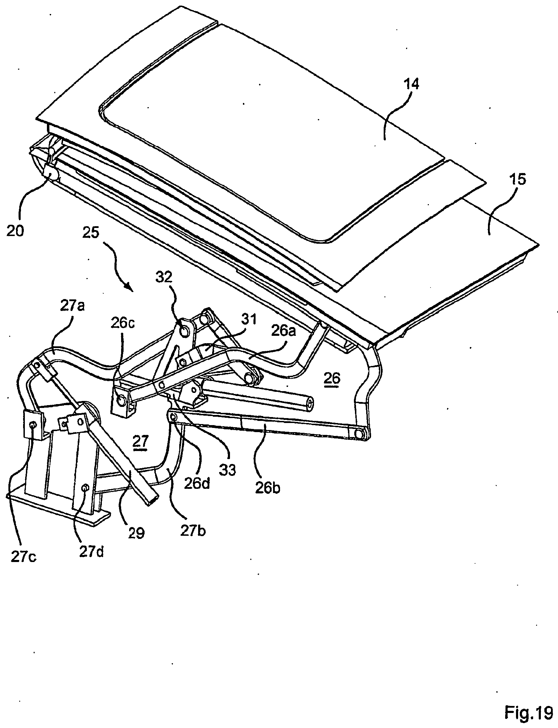

- Fig. 16 bis Fig. 19: chronologisch aufeinander folgende Stadien der Dachteilöffnung,

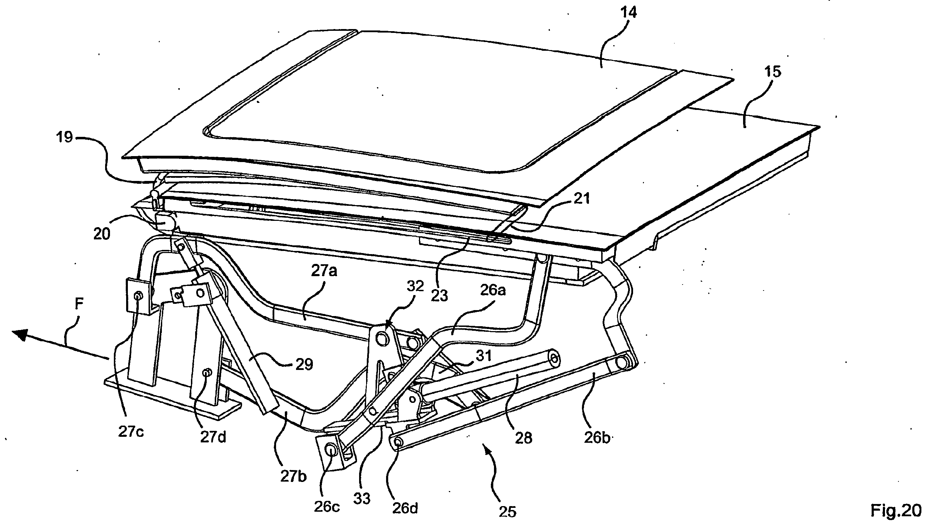

- Fig. 20: die Dachteile in vollständig geöffneter horizontaler Ablagestellung.

Das in der Zeichnung dargestellte Fahrzeug 1 umfaßt zumindest oberhalb seitlicher Scheiben 2 in sich jeweils starre und karosseriefeste Dachrahmenteile 3, die in Ansicht von oben im wesentlichen längs zur Fahrzeugerstreckung zwischen einem Windschutzscheibenrahmen 4 und dem Heckbereich 5 des Fahrzeugs liegen.

Das Fahrzeug 1 umfaßt weiter, was nicht zwingend ist, eine Karosserie 6 mit vier seitlichen Türen 7, 8, wobei sich die Dachrahmenteile 3 vom Windschutzscheibenrahmen 4 bis zu den hinteren Türen 8 unmittelbar nachgeordneten und nahezu vertikal aufragenden Karosseriesäulen 9, den sog. C-Säulen, erstrecken.

Im hinteren Fahrzeugbereich 5, beginnend hinter den Karosseriesäulen 9, schließt sich im Ausführungsbeispiel ein Vollcabrioletbereich 10 mit einem beweglichen hinteren Dachabschnitt 11 an, was ebenfalls nicht zwingend ist, jedoch das Freiluftgefühl verbessert. Dieser umfaßt eine Heckscheibe 12, die von einem den Dachabschnitt 11 außerhalb der Heckscheibe 12 vollständig überspannenden Bezug 13 umgeben ist. Auch andere Ausbildungen des Dachabschnitts 11 sind möglich.

Das Fahrzeug 1 umfaßt weiter im gezeichneten Ausführungsbeispiel in Fahrtrichtung F an den hinteren Dachabschnitt 11 angrenzend und diesem vorgeordnet weitere bewegliche Dachteile 14, 15. Ihre Anzahl ist je nach Dachlänge variabel; sie liegen im geschlossenen Zustand im wesentlichen horizontal, fluchtend hintereinander und stützen sich unmittelbar oder mittelbar an den seitlichen Dachholmen 3 ab. Die - hier zwei - im wesentlichen plattenförmigen Dachteile 14, 15 können aus unterschiedlichen Materialien, etwa metallischen, Glas- oder Kunststoffwerkstoffen, gebildet sein. Insbesondere können sie im wesentlichen transparent ausgebildet sein, wobei das vordere Dachteil 14 unmittelbar an den Windschutzscheibenrahmen 4 anschließen kann, um in Offenstellung ein gutes Freiluftgefühl zu gewährleisten.

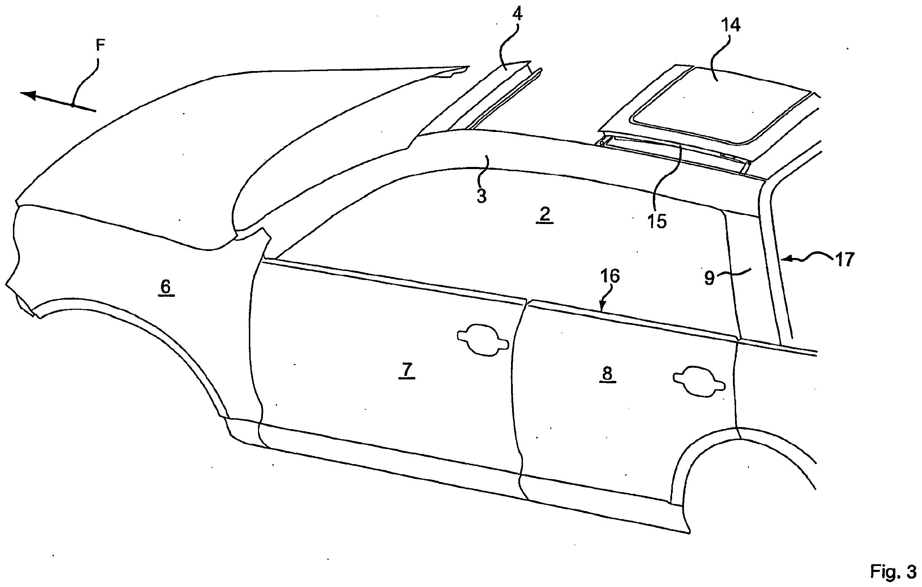

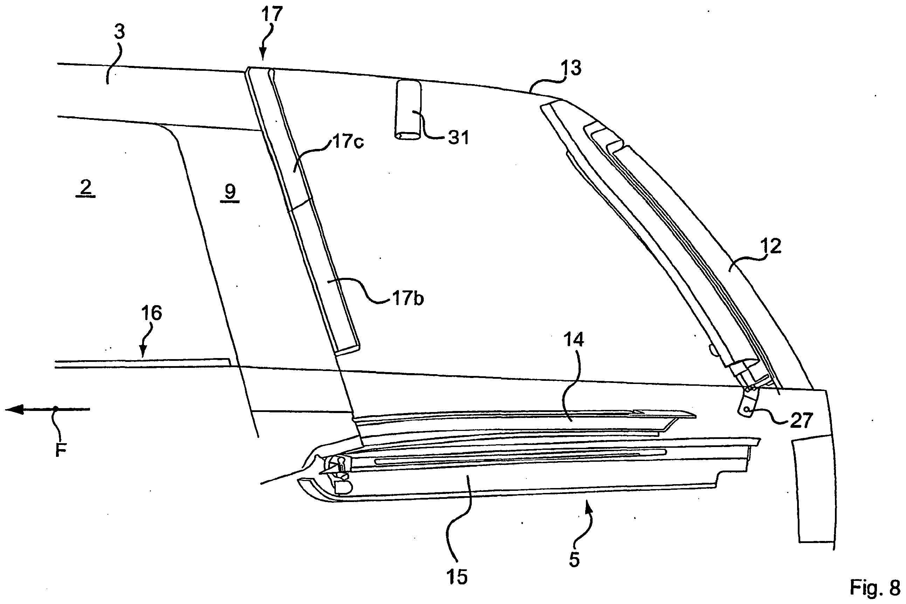

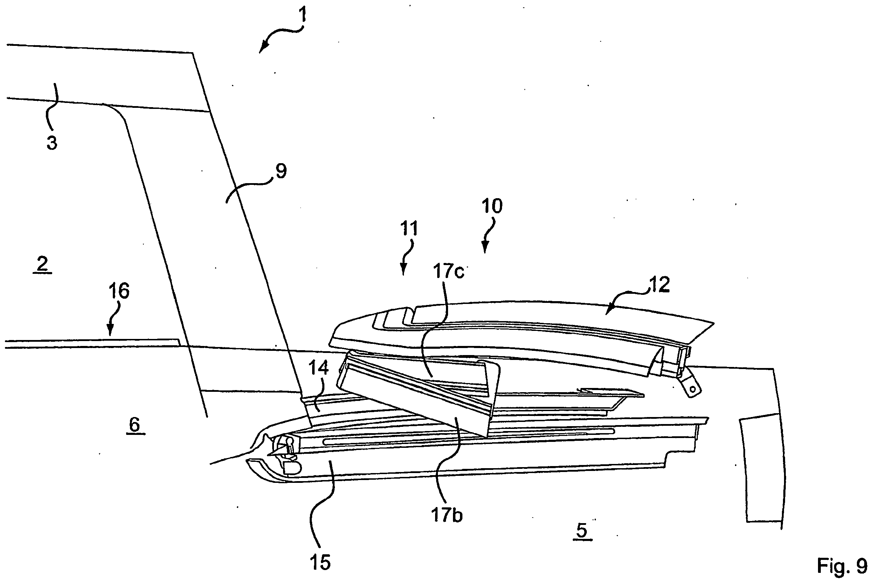

Das vordere Dachteil 14 ist aus der geschlossenen Stellung heraus nach Art eines Schiebedachs über das dahinter liegende Dachteil 15 verlagerbar und liegt in seiner geöffneten Stellung im wesentlichen parallel auf diesem (Fig. 3). Die so gebildete Stellung der Dachteile 14, 15 stellt eine mögliche dauerhafte Fahrstellung dar. Aus ihr heraus kann jedoch auch eine weitere Dachöffnung mit Abwärtsverlagerung der als Paket übereinanderliegenden Dachteile 14, 15 erfolgen, um diese in die Karosserie 6 abzusenken, wobei die karosseriefesten Seitenrahmen 3 stehenbleiben und somit die Überschlagsicherheit für die Insassen erhalten bleibt. Die Dachteile 14, 15 liegen im gezeichneten Ausführungsbeispiel im geöffneten, abgelegten Zustand zumindest nahezu horizontal unterhalb der die Unterkante der Seitenscheiben 7, 8 bildenden Fensterbrüstungslinie 16 (Fig. 8, Fig. 9). Zur Ablage der Dachteile 14, 15 unabhängig vom hinteren Dachabschnitt 11 dient ein weiter unten noch detailliert beschriebenes Gestänge 25.

Um die Bewegung des vorderen Dachteils 14 gegenüber dem dahinter liegenden Dachteil 15 zu ermöglichen, ist an den seitlichen Rahmenteilen jeweils eine karosseriefeste Führungsschiene 17 vorgesehen, in die das Dachteil 14 über seinem vorderen Ende zugeordnete und mit Gleit- oder Rollkörpern 18 versehene Ausleger 19 eingreifen kann. Die Führungsschienen 17 verlaufen entgegen der Fahrtrichtung F leicht aufwärts, so daß ein darin geführtes Dachteil 14 bei seiner Bewegung nach hinten gleichzeitig angehoben wird. Die Führungsschienen 17 münden im hinteren Bereich in Fortsetzungen 20, die dem dahinter liegenden Dachteil 15 zugeordnet und daher mit diesem beweglich sind.

Die Fortsetzungen 20 sind nach Art von Taschen mit in Fahrtrichtung F weisender Öffnung gebildet und liegen bei geschlossenem hinterem Dachteil 15 fluchtend zu den in den Dachrahmenteilen angeordneten karosseriefesten Führungsschienen 17. Die Taschen 20 haben dabei nur eine geringe Erstreckung, gerade groß genug, um den Gleit- oder Rollkörper 18 aufnehmen zu könnten. Typischerweise beträgt die Längserstreckung der Fortsetzung 20 weniger als sechs Zentimeter.

Das hintere Ende des vorderen Dachteils ist über seitlich im äußeren Bereich liegende Schwenkhebel 21 mit einem Gleiter 22 verbunden, der in einer weiteren Längsführung 23, die dem hinteren Dachteil 15 zugeordnet und ebenfalls mit diesem beweglich ist, verschieblich ist. Dadurch, daß die Fortsetzung 20 nur geringe Ausmaße aufweist, kann die weitere Längsführung 23 sich nahezu über die gesamte Länge des hinteren Dachteils 15 erstrecken, ohne daß dieses eine große Dicke aufweisen muß.

Die Schwenkhebel 21 greifen dabei jeweils um die seitlichen Kanten des Dachteils 15 herum in die längs zum Fahrzeug 1 erstreckten Längsführungen 23 ein. zu erhalten. Die Spalte zwischen Dachteil 15 und Seitenrahmen 3 können etwa mit Bürstendichtungen oder Gummilippen abgedichtet sein.

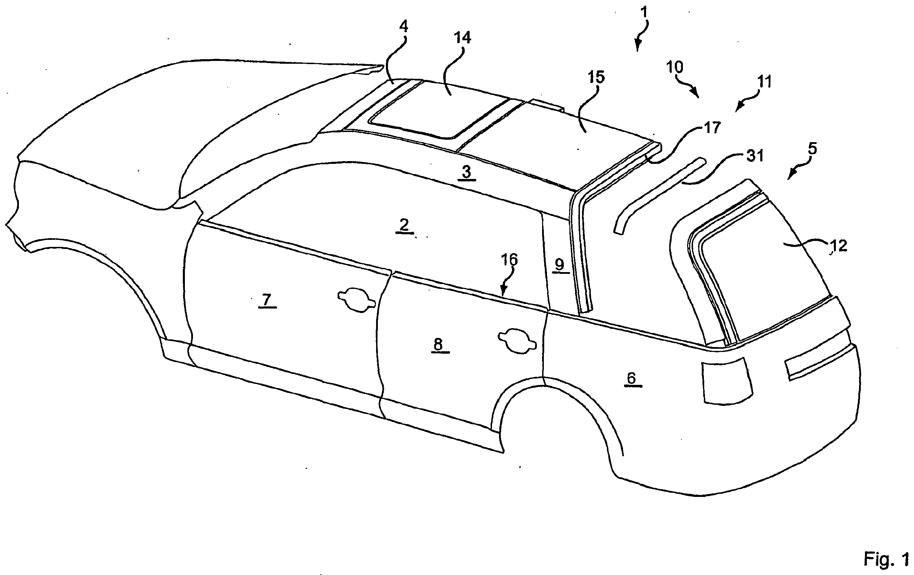

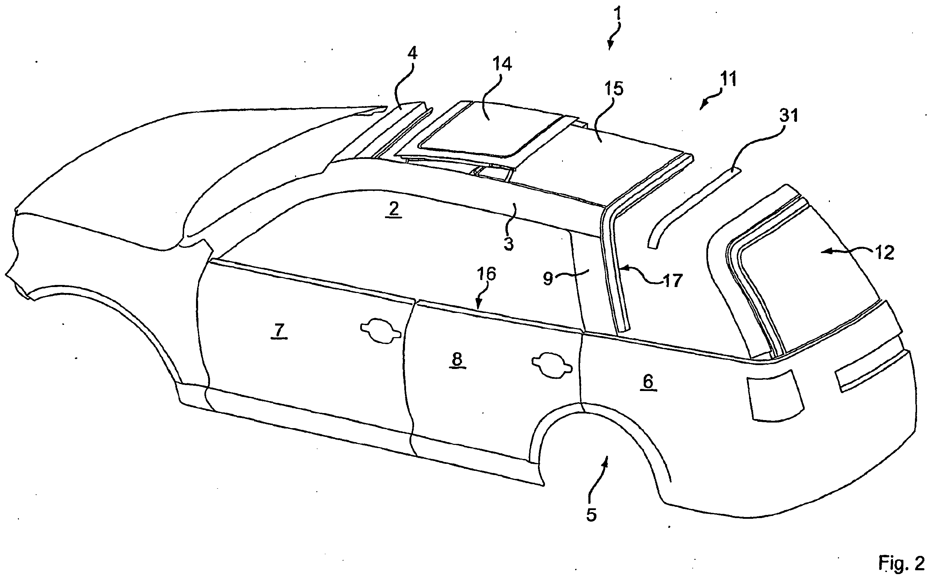

Im geschlossenen Zustand und bei der Schiebedachöffnung des vorderen Dachteils 14 ist dieses mit seinen vorderen Auslegern 19 in den karosseriefesten Führungsschienen 17 gehalten; die hinteren Schwenkhebel 21 sind hingegen während jedes Bewegungszustands des vorderen Dachteils 14 an den Längsführungen 23 geführt. Im Übergang aus dem geschlossenen Zustand nach Fig. 1 stellen sich dabei die Schwenkhebel 21 aus einer im wesentlichen horizontalen Stellung auf (Fig. 2), so daß der hintere Bereich des Dachteils 14 angehoben wird und über das dahinter liegende Dachteil 15 geschoben werden kann. Der vordere Bereich des Dachteils 14 wird hingegen durch die aufwärts verlaufende Führungsschiene 17 mit angehoben. Erst kurz vor der vollständigen Schiebedachöffnung (Fig. 3) werden die Roll- oder Gleitkörper 18 der vorderen Ausleger 19 von der Führungsschiene 17 in die Fortsetzung 20 des zweiten Dachteils 15 übergeben, so daß dann auch der vordere Bereich des vorderen Dachteils 14 an dem Dachteil 15 und außer Eingriff mit der festen Führungsschiene 17 der Karosserie 6 gehalten ist.

Aus dieser Stellung heraus kann, wie in den Figuren 15 bis 20 in herausgezeichneter Baugruppendarstellung gezeigt ist, das Paket aus den Dachteilen 14 und 15 in der Karosserie 6 im Bereich der Fensterbrüstungslinie 16 unter Freilassung eines Kofferraums abgelegt werden (Fig. 8, Fig. 9).

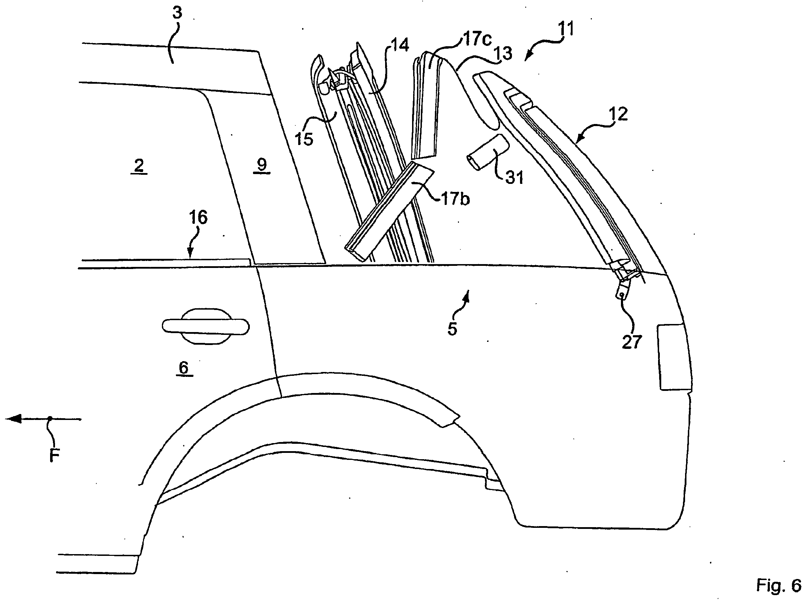

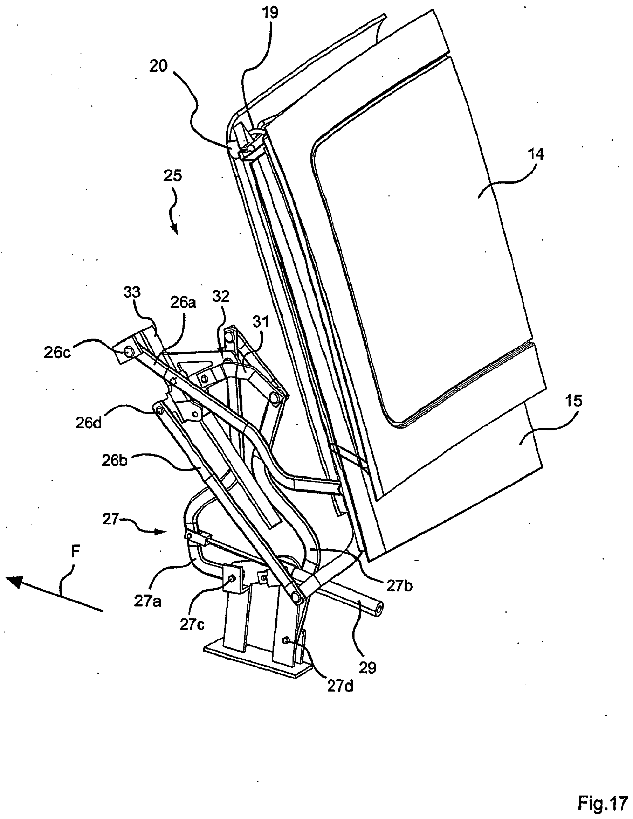

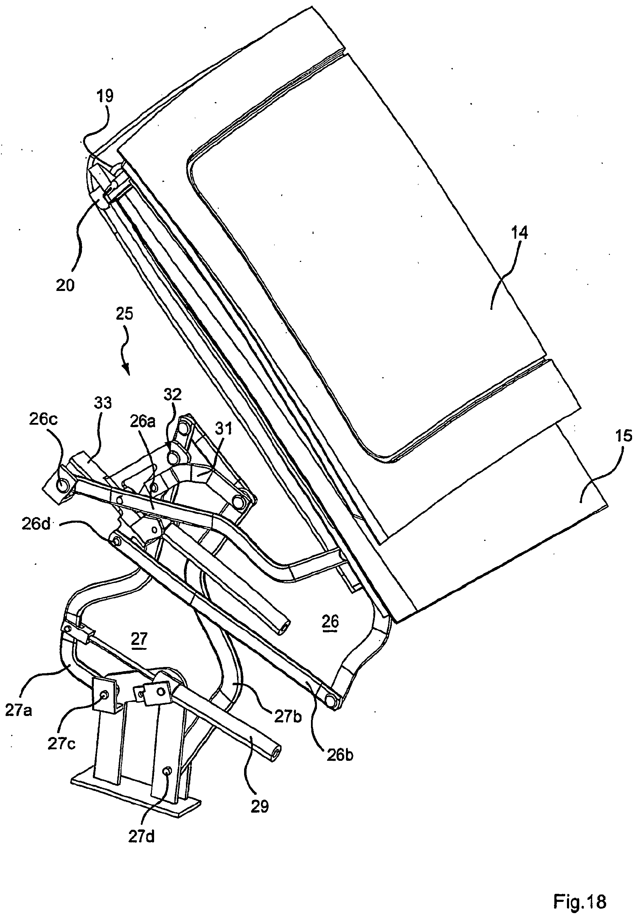

Für die vollständige Öffnung der Dachteile 14, 15 sind diese an einem gemeinsamen Gestänge 25 unabhängig vom hinteren Dachabschnitt 11 gehalten. Mit Hilfe dieses Gestänges 25 sind sie aus der übereinander liegenden Paketstellung (Fig.3; Fig. 15) zunächst in eine leicht schräge (Fig. 16) und dann nahezu vertikale Lage (Fig. 17) verkippbar, wobei die Dachteile 14, 15 gleichzeitig mit ihren rückwärtigen Enden abgesenkt werden (Fig. 6), so daß sie auch in nahezu vertikaler Stellung die geschlossene Fahrzeughöhe nur geringfügig überragen. Anschließend werden die Dachteile 14, 15 dann in ihre horizontale Packstellung im Bereich der Fensterbrüstungslinie 16 rückverschwenkt und dabei nach hinten verlagert (Fig. 18 - Fig. 20), so daß sich die auch in den Figuren 8 und 9 gezeichnete Endstellung ergibt.

Das Gestänge 25 weist hierzu ein oberes und ein unteres Viergelenk 26, 27 auf, die jeweils durch ein schwenkbar gelagertes Antriebsorgan 28, 29 mehr oder weniger geöffnet oder geschlossen werden können. Die Viergelenke 26, 27 sind über einen Drehpunkt 32 und einen weiteren Hebel 31 miteinander verbunden.

In der ersten Phase der Öffnung (Fig. 15 - Fig. 17), in der die Dachteile 14, 15 aus der horizontalen Lage in die nahezu vertikale Lage verlagert werden, bleibt das untere Viergelenk 27 unbewegt, während das obere Viergelenk 26 durch Einfahren des Antriebsorgans 28 nach hinten durchschwenkt. Dazu werden die Lenker 26a, 26b um die in dieser Bewegungsphase festgehaltenen Gelenke 26c, 26d heckwärts und abwärts verlagert und die damit verbundenen Dachteile 14, 15 in eine nahezu vertikale Lage verschwenkt.

In der zweiten Phase der Öffnung (Fig. 18 - Fig. 20), in der die Dachteile 14, 15 aus der nahezu vertikalen Lage in eine horizontale Lage rückverschwenkt werden, fährt das zweite Antriebsorgan 29 ein. Dadurch werden die Lenker 27a, 27b des unteren Viergelenks 27 um die karosseriefesten und quer zur Fahrtrichtung gelegenen Achsen 27c, 27d heckwärts und abwärts verschwenkt.

Das obere Viergelenk 26 wird dabei in sich nicht mehr bewegt. Die Hebel 26a, 26b verändern ihre relative Lage zueinander und um die Gelenke 26c, 26d nicht.

Gleichzeitig wird jedoch durch den zwischen den Viergelenken 26 und 27 liegenden weiteren Hebel 31 und den Drehpunkt 32 die Bewegung des unteren Viergelenks 27 auf einen Träger 33 und somit auf die Gelenke 26c und 26d übertragen, die an dem gemeinsamen Träger 33 gehalten sind, daß sie aus ihrer nahezu übereinander liegenden Lage nach Fig. 17 in eine nahezu horizontal hintereinander liegende Lage nach Fig. 20 verlagert werden und somit das Paket aus den Dachteilen 14 und 15 während des Abwärtsverschwenkens der Lenker 27a und 27b gleichzeitig aus der nahezu vertikalen Lage in eine nahezu horizontale Lage verbracht und dabei zumindest mit seinem hinteren Kantenbereich angehoben wird. Am Ende der Öffnungsbewegung (Fig. 20; Fig. 8; Fig. 9) nimmt es daher eine den Kofferraum abdeckende Lage ein.

Am Ende der umgekehrten Bewegung zum Schließen der Dachteile 14, 15 ist das hintere, von dem Gestänge 25 bewegte Dachteil 15 an den seitlichen Rahmenteilen 3 zentrierbar und verriegelbar, etwa über konische und damit selbst zentrierende zapfen, die in entsprechende Ausnehmungen der Rahmenteile 3 eingreifen.

Da die Bewegung der Dachteile 14, 15 über das Gestänge 25 unabhängig von der Bewegung des hinteren Dachabschnitts 11 ist, erlaubt das Fahrzeug 1 eine Vielzahl von dauerhaften Öffnungszuständen des Daches:
zunächst eine vollständig geschlossene Stellung von Dachteilen 14, 15 und hinterem Dachabschnitt 11 (Fig. 1) ; des weiteren eine nach Art eines Schiebedachs geöffnete oder eine vollständig geöffnete und in der Karosserie 6 abgelegte Stellung der Dachteile 14, 15 bei geschlossenem hinterem Dachabschnitt 11 (Fig. 8); die vollständig geöffnete Stellung der Dachteile 14, 15 mit darüber geöffnetem hinterem Dachabschnitt 11, so daß der hinter den Karosseriesäulen 9 liegende Karosseriebereich 5 wie bei einem Vollcabriolet geöffnet ist (Fig. 9). Schließlich kann auch nur der hintere Dachabschnitt 11 nach Art eines Landaulet-Fahrzeugs geöffnet werden, während die Dachteile 14, 15 geschlossen verbleiben oder in der nach Art eines Schiebedachs geöffneten Stellung liegen.

Für die Schiebedachöffnung (Übergang von Figur 1 zu Figur 3) braucht der hintere Dachabschnitt 11 nicht bewegt zu werden. Der vordere Dachteil 14 fährt lediglich über den dahinter liegenden Dachteil 15. Auch während des Ablage der Dachteile 14, 15 braucht der hintere Dachabschnitt 11 nicht vollständig, sondern lediglich in seinem vorderen Bereich geöffnet zu sein.

Die Erfindung ist sowohl bei Fahrzeugen mit manuell zu bewegenden Dachteilen 14, 15, 11 als auch bei voll- oder teilautomatischer Beweglichkeit der Teile anwendbar.

## Patentansprüche

1. Kraftfahrzeug (1) mit einer Fahrzeugkarosserie (6), die karosseriefeste und oberhalb von Seitenscheiben (2) erstreckte Dachrahmenteile (3) und zumindest zwei bewegliche und im wesentlichen plattenförmige Dachteile (14;15) umfaßt, die in geschlossener Stellung fluchtend hintereinander liegen,
wobei das vordere (14) der beiden Dachteile nach Art eines Schiebedachs unter oder insbesondere über das dahinter liegende Dachteil (15) verlagerbar ist und hierfür den seitlichen Rahmenteilen (3) jeweils eine karosseriefeste Führungsschiene (17) für das vordere der beiden Dachteile (14;15) zugeordnet ist, die in ihrem entgegen der Fahrtrichtung (F) liegenden hinteren Endbereich in eine dem hinteren Dachteil (15) zugeordnete und mit diesem bewegliche Fortsetzung (20) einmündet,
wobei dem hinteren Dachteil (15) neben der Fortsetzung (20) der ansonsten karosseriefesten Führungsschiene (17) eine weitere Längsführung (23) zugeordnet ist und hiermit das vordere Dachteil (14) in vollständig nach Art eines Schiebedaches geöffneter Stellung an dem hinteren Dachteil (15) doppelt geführt ist,
wobei das vordere Dachteil (14) in nach Art eines Schiebedachs geöffneter Stellung mit seinem vorderen Bereich in den beweglichen Fortsetzungen (20) der Führungsschienen (17) und mit seinem hinteren Bereich in den dem hinteren Dachteil (15) zugeordneten Längsführungen (23) gehalten ist,
wobei die Dachteile (14;15) zur Einstellung einer Gesamtoffenstellung vollständig von den seitlichen Rahmenteilen (3) lösbar und mit Hilfe zumindest eines Gestänges (25) in die Fahrzeugkarosserie (6) verlagerbar sind, und wobei der Bereich fester seitlicher Dachrahmenteile (3) an einer aufragenden Karosseriesäule (9) im hinteren Bereich einer seitlichen Tür (8) endet und sich hieran heckwärts ein insgesamt versenkbarer Vollcabriolet-Bereich (10) anschließt.

2. Kraftfahrzeug (1) nach Anspruch 1,
**dadurch gekennzeichnet,**
**dass** das vordere Dachteil (14) in geschlossenem Zustand und während seiner beginnenden Öffnung nach Art eines Schiebedachs mit seinem vorderen Bereich in den karosseriefesten Führungsschienen (17) und mit seinem hinteren Bereich in den beweglichen Längsführungen (23) gehalten ist.

3. Kraftfahrzeug nach einem der Ansprüche 1 oder 2,
**dadurch gekennzeichnet,**
**dass** das vordere Dachteil (14) über das hintere (15) verlagerbar ist und die karosseriefesten Führungsschienen (17) entgegen der Fahrtrichtung (F) aufwärts verlaufen.

4. Kraftfahrzeug nach einem der Ansprüche 1 bis 3,
**dadurch gekennzeichnet,**
**dass** das vordere Dachteil (14) über an Auslegern (19) festgelegte Gleit- oder Rollkörper (18) in die Führungsschienen (17) bzw. die Fortsetzungen (20) eingreift.

5. Kraftfahrzeug nach einem der Ansprüche 1 bis 4,
**dadurch gekennzeichnet,**
**dass** die beweglichen Fortsetzungen (20) der karosseriefesten Führungsschienen (17) nach Art von Taschen ausgebildet sind und in Fahrzeuglängsrichtung eine Erstreckung von weniger als sechs Zentimetern haben.

6. Kraftfahrzeug nach Anspruch 1,
**dadurch gekennzeichnet,**
**dass** bei Verlagerung der Dachteile (14;15) in ihre Gesamtoffenstellung das vordere Dachteil (14) nach Art eines Schiebedachs geöffnet parallel zum hinteren Dachteil (15) liegt.

7. Kraftfahrzeug nach einem der Ansprüche 1 bis 6,
**dadurch gekennzeichnet,**
**dass** das hintere Dachteil (15) an den seitlichen Rahmenteilen (3) zentrierbar und verriegelbar ist.

## Claims

1. A motor vehicle (1) with a vehicle body (6), which comprises roof frame parts (3) fixed to the vehicle body and extending above side windows (2) and at least two movable and substantially plate-shaped roof parts (14;15) which are arranged in sequence and aligned with each other in the closed position,
wherein the front roof part (14) of said two roof parts can be moved in the manner of a sunroof under or, in particular, over the roof part (15) located behind it, for which purpose each of the lateral frame parts (3) has a respective body-fixed guide rail (17) for the front one of the two roof parts (14;15) assigned to it, said guide rail (17) terminating, in the area of its rear end located counter to the direction of travel, in an extension (20) which is assigned to the rear roof part (15) and can be moved together with the latter,
wherein, in addition to the extension (20) of the guide rail (17) otherwise fixed to the vehicle body, another, longitudinal guide (23) is assigned to the rear roof part (15), and hereby, when opened completely in the manner of a sunroof, the front roof part (14) is double guided along the rear roof part (15),
wherein, when opened in the manner of a sunroof, the front roof part (14) is held by its front area in the movable extensions (20) of the guide rails (17), and is held by its rear area in the longitudinal guides (23) assigned to the rear roof part (15),
wherein, in order to adjust an overall opening position, the roof parts (14; 15) can be detached completely from the lateral roof frame parts (3) and can be moved into the vehicle body (6) by means of at least one linkage (25),
and wherein the area of fixed lateral roof frame parts (3) terminates at an upwardly extending body pillar (9) in the rear area of a side door (8), thereto adjoining at the rear a full-convertible area (10) which can be retracted as a whole.

2. The motor vehicle (1) according to claim 1, **characterised in that**, in closed state and as it begins to open, the front roof part (14) is held in the manner of a sunroof, with its front area being held in the body-fixed guide rails (17) and its rear area being held in the movable longitudinal guides (23).

3. The motor vehicle according to any one of claims 1 or 2, **characterised in that** the front roof part (14) can be moved over the rear roof part (15), and the guide rails (17) fixed to the vehicle body extend upwards counter to the direction of travel (F).

4. The motor vehicle according to any one of claims 1 to 3, **characterised in that** the front roof part (14) enters into engagement with the guide rails (17) and the extensions (20), respectively, via sliding or rolling bodies (18) fixed to arms (19).

5. The motor vehicle according to any one of claims 1 to 4, **characterised in that** the movable extensions (20) of the guide rails (17) fixed to the vehicle body are provided in the manner of pockets and extend over less than six centimetres in the longitudinal vehicle direction.

6. The motor vehicle according to claim 1, **characterised in that**, during the movement of the roof parts (14;15) into their overall opening position, the front roof part (14), opened in the manner of a sunroof, is parallel to the rear roof part (15).

7. The motor vehicle according to any one of claims 1 to 6, **characterised in that** the rear roof part (15) can be centred and locked on the lateral frame parts (3).

## Revendications

1. Véhicule automobile (1) avec une carrosserie (6) qui comprend des éléments de cadre de toit (3) montés fixe à la carrosserie et s'étendant au-dessus de fenêtres latéraux (2) et au moins deux éléments de toit (14;15) déplaçables et sensiblement en forme de panneaux, qui sont disposés en alignement l'un derrière l'autre en position fermé,
et l'élément de toit avant (14) desdits deux éléments de toit est déplaçable, à la manière d'un toit ouvrant, sous ou notamment sur l'élément de toit (15) disposé derrière ce premier, un rail de guidage (17) respectif, monté fixe sur la carrosserie, pour l'élément de toit (14;15) avant étant associé dans ce but à chacun des éléments de cadre latéraux (3), ledit rail de guidage (17) se terminant, dans sa région d'extrémité arrière disposée à l'opposée de la direction de marche (F), en une extension (20) qui est associée avec l'élément de toit arrière (15) et est déplaçable ensemble avec ce dernier,
et en plus de l'extension (20) du rail de guidage (17), qui pour le reste est monté fixe sur la carrosserie, un guidage longitudinal (23) est associé avec l'élément de toit arrière (15), et ainsi la partie avant de l'élément de toit avant (14) est guidée doublement de long de l'élément de toit arrière (15), lorsque l'élément de toit avant (14) se trouve dans sa position ouverte totalement à la manière d'un toit ouvrant,
et la partie avant de l'élément de toit avant (14) est maintenu dans les extensions (20) déplaçables des rails de guidage (17) et la partie arrière de l'élément de toit avant (14) est maintenu dans les guides longitudinaux (23) associés avec l'élément de toit arrière (15) lorsque l'élément de toit avant (14) se trouve dans sa position ouverte à la manière d'un toit ouvrant,
et, pour ajuster une position d'ouverture générale, les éléments de toit (14; 15) sont amovibles complètement des éléments de cadre de toit (3) latéraux et sont déplaçables vers l'intérieur de la carrosserie (6) au moyen d'au moins une tringlerie (25),
et la région d'éléments de cadre de toit (3) latéraux fixes se termine en un montant de carrosserie (9) vertical dans la partie arrière d'une porte latérale (8), à laquelle se rattache vers l'arrière une partie de cabriolet complet (10) qui est escamotable en totalité.

2. Véhicule automobile (1) selon la revendication 1, **caractérisé en ce qu'**en état fermé et au début de son ouverture, l'élément de toit avant (14) est maintenu, à la manière d'un toit ouvrant, par sa partie avant dans les rails de guidage (17) montés fixes sur la carrosserie et, par sa partie arrière, dans les guides longitudinaux (23) déplaçables.

3. Véhicule automobile selon l'une quelconque des revendications 1 ou 2, **caractérisé en ce que** l'élément de toit avant (14) est déplaçables sur l'élément de toit arrière (15), et les rails de guidage (17) montés fixe sur la carrosserie s'étendent vers le haut à l'opposée de la direction de marche (F).

4. Véhicule automobile selon l'une quelconque des revendications 1 à 3, **caractérisé en ce que** l'élément de toit avant (14) vient en prise respectivement dans les rails de guidage (17) et les extensions (20) au moyen de corps de glissement ou de roulement (18) montés fixes à des bras (19).

5. Véhicule automobile selon l'une quelconque des revendications 1 à 4, **caractérisé en ce que** les extensions (20) déplaçables des rails de guidage (17) montés fixe sur la carrosserie sont réalisées à la manière de poches et s'étendent sur moins de six centimètres dans la direction longitudinale du véhicule.

6. Véhicule automobile selon la revendication 1, **caractérisé en ce que**, lors du déplacement des éléments de toit (14;15) vers leur position d'ouverture générale, l'élément de toit avant (14), ouvert à la manière d'un toit ouvrant, est parallèle à l'élément de toit arrière (15).

7. Véhicule automobile selon l'une quelconque des revendications 1 à 6, **caractérisé en ce que** l'élément de toit arrière (15) peut être centré et verrouillé sur les éléments de cadre latéraux (3).
